# EUROPÄISCHE PATENTANMELDUNG

(11) **EP 0 778 564 A1**
(43) Veröffentlichungstag der Anmeldung: **11.06.1997**
(21) Anmeldenummer: 96117745.8
(22) Anmeldetag: 06.11.1996
(51) Int. Cl.: G11B 7/125

(54) **Vorrichtung zum Belichten eines kreisscheibenförmigen Substrates**

(30) Priorität: 08.12.1995 DE 19545857
(71) Anmelder: Balzers und Leybold Deutschland Holding Aktiengesellschaft, 63450 Hanau (DE)
(72) Erfinder: Hensel, Bernd, 65760 Eschborn (DE); Kaiser, Paul, 81539 München (DE); Hofmann, Friedrich, 63654 Büdingen (DE); Rudolf, Manfred, 01307 Dresden (DE); Koop, Hermann, Dr., 30952 Ronnenberg (DE)
(74) Vertreter: Schlagwein, Udo, Dipl.-Ing.

(57) **Zusammenfassung**

Bei einer Vorrichtung zum Belichten eines kreisscheibenförmigen Substrates (11) mittels eines von einem Laser (1) erzeugten Laserstrahls (2) wird der Laserstrahl (2) mittels eines Modulators (4) moduliert und anschließend zur Bildung eines das Substrat (11) belichtenden Laserspots durch ein Laserobjektiv (10) geführt. Zur Veränderung des Durchmessers des Laserspots dient eine Strahlaufweitungseinrichtung (6) zwischen dem Modulator (4) und dem Laserobjektiv (10), welche austauschbar oder verstellbar ist.

## Beschreibung

Die Erfindung betrifft eine Vorrichtung zum Belichten eines kreisscheibenförmigen Substrates mittels eines Laserstrahls, bei der der Laserstrahl mittels eines Modulators moduliert und anschließend zur Bildung eines das Substrat belichtenden Laserspots durch ein Laserobjektiv geführt wird und welche Mittel zur Veränderung des Durchmessers des Laserspots aufweist.

Mit solchen Vorrichtungen werden zur Informationsspeicherung Pits auf einer spiralförmigen Schreibspur des Substrates plaziert. Bei den Substraten handelt es sich meist um Masterscheiben, mit denen anschließend Compact Disks hergestellt werden. Wenn Masterscheiben mit unterschiedlichen physikalischen Speicherdichten gefertigt werden sollen, dann muß der Spurabstand auf den Masterscheiben verändert werden. Je höher die Informationsdichte ist, um so näher zueinander verläuft die spiralförmige, zur Datenspeicherung Pits aufweisende Spur auf der Masterscheibe. Das erfordert es, daß der Durchmesser des Laserspots entsprechend klein wird.

Wenn man bei den heute bekannten Vorrichtungen den Durchmesser des Laserspots verändern will, dann wechselt man von Hand das Laserobjektiv aus, was einen Arbeitsaufwand von etwa zwei Stunden erfordert. Denkbar wäre es auch, zur Verringerung des Spotdurchmessers verstellbare Blenden vorzusehen. Das hätte den Nachteil, daß Laserlicht ungenutzt bliebe, wodurch die mögliche Schreibgeschwindigkeit beim Laserstrahlbelichten sänke oder was zum Ausgleich des Leistungsverlustes eine höhere Laserleistung erfordern würde, was zu relativ hohen Kosten führte.

Der Erfindung liegt das Problem zugrunde, eine Vorrichtung zum Belichten eines kreisscheibenförmigen Substrates zu entwickeln, welche ein möglichst rasches und verlustfreies Verändern des Durchmessers des Laserspots ermöglicht.

Dieses Problem wird erfindungsgemäß dadurch gelöst, daß die Mittel zur Veränderung des Durchmessers des Laserspots durch eine austauschbare oder verstellbare Strahlaufweitungseinrichtung zwischen dem Modulator und dem Laserobjektiv gebildet sind.

Bei einer solchen Vorrichtung wird die Ausleuchtung der Eintrittspupille des Laserobjektivs durch Variation der Strahlaufweitung verändert. Dadurch kommt es zu einer Veränderung des Spotdurchmessers, ohne daß Laserleistung vernichtet wird. Das führt zu einer relativ zur Laserleistung besonders hohen Recordinggeschwindigkeit. Hinzu kommt, daß die Schärfentiefe des Laserobjektivs durch Verringerung der Strahlaufweitung vergrößert wird, was bei höheren Schreibgeschwindigkeiten das Nachfokussieren erleichtert. Im Gegensatz zu dem bisher erforderlichen Austausch des Laserobjektivs erfordert das Austauschen oder Verstellen der Strahlaufweitungseinrichtung nur einen sehr geringen Arbeitsaufwand und kann sogar automatisch erfolgen, wenn man in die Vorrichtung geänderte Soll-Dichte-Daten eingibt.

Die Strahlaufweitungseinrichtung kann mit in der Optik üblichen und kostengünstig erhältlichen Bauteilen erzeugt sein, wenn sie modulatorseitig eine als Sammellinse ausgebildete Strahlaufweitungslinse und laserobjektivseitig eine Plankonkavlinse hat und die Strahlaufweitungslinse und Plankonkavlinse einen gemeinsamen Brennpunkt haben.

Der Aufwand zur Veränderung der Strahlaufweitung ist besonders gering, wenn hierzu nur die Strahlaufweitungslinse austauschbar oder verstellbar ist.

Ganz besonders gering ist der Aufwand zur Veränderung der Strahlaufweitung, wenn gemäß einer vorteilhaften Weiterbildung der Erfindung der Abstand zwischen der Strahlaufweitungslinse und der Plankonkavlinse verstellbar ist. Auch bei einer solchen Verstellung vergrößert sich bei einer Verringerung des Spotdurchmessers die Schärfentiefe.

Eine besonders rasche Anpassung des Spotdurchmessers an die geforderte Speicherdichte wird möglich, wenn gemäß einer anderen Weiterbildung der Erfindung die Strahlaufweitungslinse zusammen mit weiteren Strahlaufweitungslinsen auf einem gemeinsamen Teilkreisdurchmesser eines schwenkbar im Strahlengang des Laserstrahls angeordneten Revolvers angeordnet ist.

Die Erfindung läßt verschiedene Ausführungsformen zu. Zur weiteren Verdeutlichung ihres Grundprinzips ist eine davon schematisch in der Zeichnung dargestellt und wird nachfolgend beschrieben. Die Zeichnung zeigt in
- Fig.1: eine Prinzipskizze der Vorrichtung nach der Erfindung,
- Fig.2: einen Revolver mit Aufweitungslinsen gemäß der Erfindung.

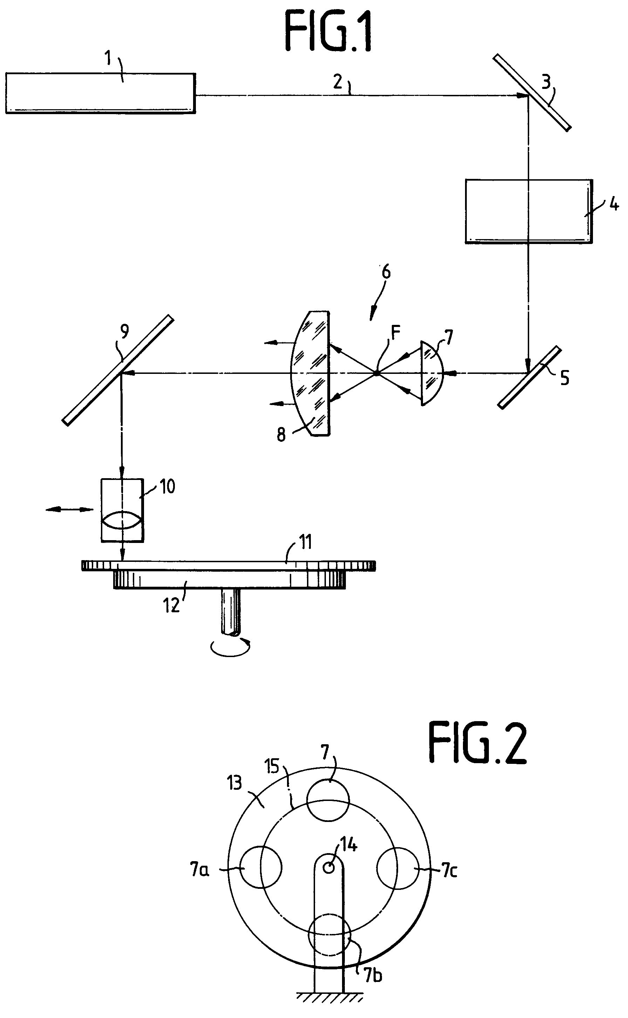

Die Figur 1 zeigt einen Laser 1, welcher einen Laserstrahl 2 über einen Spiegel 3 einem Modulator 4 zuführt.

Dort wird der Laserstrahl 2 entsprechend der zu belichtenden Information moduliert und über einen weiteren Spiegel 5 einer Strahlaufweitungseinrichtung 6 zugeführt. Diese Strahlaufweitungseinrichtung 6 hat modulatorseitig eine als Konvexlinse ausgebildete Strahlaufweitungslinse 7 und weiterhin eine Plankonkavlinse 8. Die Strahlaufweitungslinse 7 und die Plankonkavlinse 8 haben zwischen sich einen gemeinsamen Brennpunkt F. Das Verhältnis der beiden Brennweiten bestimmt das Maß der Aufweitung des Laserstrahls 2.

Die Plankonkavlinse 8 führt den aufgeweiteten Laserstrahl 2 einem Umlenkspiegel 9 zu, der ihn in ein Laserobjektiv 10 reflektiert. Mittels des Laserobjektivs 10 wird ein Substrat 11 belichtet, welches auf einem während des Belichtungsvorganges rotierenden Drehteller 12 aufliegt. Hierbei kommt es zu einer Relativbewegung zwischen dem Substrat 11 und dem Laserobjektiv 10, damit auf dem Substrat 11 eine spiralförmige Spur mit Pits entstehen kann.

Die Figur 2 zeigt einen Revolver 13, welcher um eine Achse 14 schwenkbar ist und insgesamt vier Strahlaufweitungslinsen 7, 7a, 7b und 7c auf einem gemeinsamen Teilkreis 15 hat. Diese Strahlaufweitungslinsen 7, 7a, 7b, 7c haben unterschiedliche Brennweiten, so daß je nach dem, welche davon sich im Strahlengang befindet, es zu einer unterschiedlichen Strahlaufweitung kommt.

### Bezugszeichenliste

- 1: Laser
- 2: Laserstrahl
- 3: Spiegel
- 4: Modulator
- 5: Spiegel
- 6: Strahlaufweitungseinrichtung
- 7: Strahlaufweitungslinse
- 8: Plankonkavlinse
- 9: Umlenkspiegel
- 10: Laserobjektiv
- 11: Substrat
- 12: Drehteller
- 13: Revolver
- 14: Achse
- 15: Teilkreis

## Patentansprüche

1. Vorrichtung zum Belichten eines kreisscheibenförmigen Substrates mittels eines Laserstrahls, bei der der Laserstrahl mittels eines Modulators moduliert und anschließend zur Bildung eines das Substrat belichtenden Laserspots durch ein Laserobjektiv geführt wird und welche Mittel zur Veränderung des Durchmessers des Laserspots aufweist, **dadurch gekennzeichnet**, daß die Mittel zur Veränderung des Durchmessers des Laserspots durch eine austauschbare oder verstellbare Strahlaufweitungseinrichtung (6) zwischen dem Modulator (4) und dem Laserobjektiv (10) gebildet sind.

2. Vorrichtung nach Anspruch 1, **dadurch gekennzeichnet**, daß die Strahlaufweitungseinrichtung (6) modulatorseitig eine als Sammellinse ausgebildete Strahlaufweitungslinse (7) und laserobjektivseitig eine Plankonkavlinse (8) hat und die Strahlaufweitungslinse (7) und Plankonkavlinse (8) einen gemeinsamen Brennpunkt (F) haben.

3. Vorrichtung nach den Ansprüchen 1 oder 2, **dadurch gekennzeichnet**, daß zur Veränderung der Strahlaufweitung nur die Strahlaufweitungslinse (7) austauschbar oder verstellbar ist.

4. Vorrichtung nach zumindest einem der vorangehenden Ansprüche, **dadurch gekennzeichnet**, daß der Abstand zwischen der Strahlaufweitungslinse (7) und der Plankonkavlinse (8) verstellbar ist.

5. Vorrichtung nach zumindest einem der vorangehenden Ansprüche, **dadurch gekennzeichnet**, daß die Strahlaufweitungslinse (7) zusammen mit weiteren Strahlaufweitungslinsen (7a, 7b, 7c) auf einem gemeinsamen Teilkreisdurchmesser eines schwenkbar im Strahlengang des Laserstrahls (2) angeordneten Revolvers (13) vorgesehen ist.
